# EUROPEAN PATENT APPLICATION

(11) **EP 1 211 861 A1**
(43) Date of publication of application: **05.06.2002**
(21) Application number: 00440315.0
(22) Date of filing: 04.12.2000
(51) Int. Cl.: H04L 29/06, G06F 17/30

(54) **Browser environment for accessing local and remote services on a phone**

(71) Applicant: ALCATEL, 75008 Paris (FR)
(72) Inventor: Bauwens, Bart, 2018 Antwerp (BE); Broos, Rudi, 2018 Antwerp (BE)
(74) Representative: KOHLER SCHMID + PARTNER

(57) **Abstract**

A method for accessing local information stored in a local data base of a communication terminal and for accessing remote information stored in a telecommunication network on a communication terminal having a browser to access remote stored information,is characterized in that said browser is also used for local information. An advantage is that both local and remote services can be used in a same manner since they are handled by means of the same software instrument, namely the same browser.

## Description

It is known in the art to store information which is accessible by means of the so called Internet (world wide web) in the form of pages which are written in the language HTML. This language allows the creation of impressive pages to be displayed on a monitor of for example 640 x 480 picture elements of a desk computer. Further it is known in the art to store information which is displayed on the relatively small display on a hand-held mobile telephone in the form of pages which are written in another language namely at this time in the language WML, and the pages are made available by means of the so called wireless application protocol (WAP).

Besides the possibility of a phone, including mobile phones, to display information from remote services, as just described, a phone having a display for such remote information normally has at least one (in most of the cases several) local information service, namely a local address book in which the user can insert names and telephone numbers of persons of interest. Other local services may include calculator, agenda, voice dialing or others. The local service/s is/are created and managed by the service provider by means of other tools than remote information services such as information about quotes , weather and traffic information. The users experiences these two types of services in a different way, these two types have a different appearance and have to be handled in a different way (because actuating elements as buttons and alike have to be actuated in another way for different services).

Therefore the user has to get acquainted to different user interfaces and different services interactions. Thus, the handling of such a phone is not so simple as possible.

It is an object of the invention to simplify the handling of a phone as described above.

This object is, starting with a method according to the introductory part of claim 1 attained by the features of the characterising part of claim 1 in that the browser is also used for local information. In other words, the object is attained in that also local information is accessed and presented by the browser.

The invention also concerns a communication terminal, for example (but not limited to) a hand held mobile phone according to the introductory part of claim 7. The object to simplify the use of such terminal is attained by the features of the characterising part of claim 7 in that the terminal is adapted for accessing and presenting also local information.

Preferably, the terminal comprises means for storing and has preferably stored software for the above mentioned accessing and presenting of local information.

An advantage of the invention is that both local and remote services can be used in a same manner since they are handled by means of the same software instrument, namely the same browser. In order to achieve this, a simple and preferred way of the invention is to store local information to be displayed on the display of the phone in the form of pages which are written in the same language as the remote information according to the present available technique, therefore written in the language WML. It is to be understood that WML is only one example and the invention is also directed to the use of other languages which are adapted for presentation of information on a display of a phone.

The phone or more generally spoken the communication terminal according to the invention may be a local phone connected by means of a wire to the telephony. It may also be a phone connected to the same telephony network my means of wireless transmission in which the wireless transmission occurs between the hand-held phone (without wire connection to the network) and a local basic station which is connected by a wire to the network (so called wireless phones). Further and preferred at the moment, the invention is used in portable phones which receive and transmit information by means of radio frequency and which are known for example in the form of mobile phones according to the standard GSM, e.g. GSM900, GSM1800, GSM1900 (where the number indicates in MHz the band of the working frequency), or the upcoming third generation (3G) standards (UMTS).

A further advantage of the invention is that the user can seamlessly switch between local and remote stored pages, thanks to the linking mechanism inherent to pages and services in a Web environment. Now the user is always in the same look-and-feel environment when he is working with his portable phone.

According to a preferred embodiment of the invention, one local service or a plurality of local services is linked to remote services of the same kind (preferably: local address book linked to a remote address book, namely the telephone directory ("White pages") of the remote services) such that the user can first try to find the wanted information on the locally stored information, for example the telephone number of a person he wants to call, and if this information is not available in the memory means of the phone, the user is able to connect easily the remote stored information or, in a further preferred embodiment, this connection to the remote information is realized automatically. In connection with the address book as just described, it is especially advantageous to use this feature together with the feature (known per se in the art) of voice dialling, namely to start a call by simply speaking the name of the wanted person into the microphone of the phone. In such case the phone checks if this name can be found in the local stored information, namely in voice powered locally stored WML pages and if the information cannot be found there, the phone searches this information automatically in a remote telephone directory the address of which (WML URL) of course must be available in any form to the phone.

Whereas the invention is possibly especially of importance for the address book, all the other services may be shared between the local memory device and remote stored information: for example the local calculator might provide simple mathematic functions up to multiplication and division. If the user needs more complicated functions or to calculate a lengthy mathematical formula, he/she may actuate a button called "further mathematical functions/possibilities" on the screen of the phone which action automatically performs the connection to a WML page of the remote services providing further mathematical services.

It is very easy to link local information with remote information using the linking mechanism inherent to WML pages. So, the user can search for a name in its address book, in case he does not find the name, he can choose to use the white pages services of the service provider (telephone directory stored in the network). The user stays in the same environment, he has the same look and feel for the local address book and the white pages services (if the local address book is arranged similarly to the white pages).

A locally stored voice powered WML page can be used to allow speech-based dialling. Different scenarios can happen:

The user knows the last name of the callee and that last name is stored in its personal local address book. He just says the last name of the person and the call is set up automatically.

In case a plurality of persons in his address book have the same last name, the browser will display a list of possible names.

In case that last name is not mentioned in its address book, automatically a page from the network is fetched, listing all or a set of all possible callees.

If the user does not know the name of the callee he can just type the telephone number. In the worst case the user can spell the number or type in the name of the callee.

Further features and advantages of the invention become more clear by means of the following description of a preferred embodiments of the invention in connection with the drawing.The features may be used individally or collectively in any combination in an embodiment of the invention.

Fig. 1 is a front view on a portable telephone for the standards GSM900 and GSM1800 (dual band phone), partly broken away to show parts inside the apparatus, and

Fig. 2 is a representation of a display showing information.

In the following description, the term "key" is used for actuating elements which can be actuated by pressing down for example with the finger of one hand as in the embodiment shown. In other embodiments of the invention, such keys may be parts of a display which are pressure-sensitive and may be actuated with a finger or with a rod-like pressing element. In contrast thereto, the term "button" in the following description describes an element which is presented on a display and which can be actuated by highlighting or marking, and thereafter an action according to the function of the button is caused automatically.

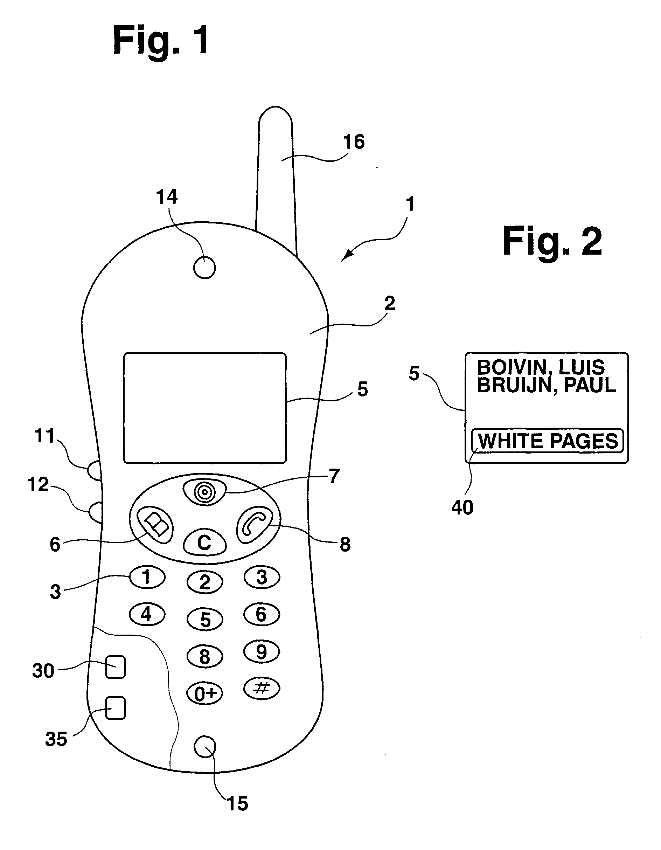

In figure 1, a mobile telephone 1 has a plurality of keys on its front side 2, all the keys being known from existing mobile telephones. The keys include ten number keys which are used to input numbers and letters, with only the number key for the cipher "1" being marked with a reference numeral 3. Some number keys are not visible because the front side 2 of the housing of the mobile telephone is partly broken away in order to show parts inside the housing.

In the space between a lower edge (in the presentation shown in figure 1) of a display 5 and the upper row of the number-keys (for ciphers 1, 2, 3) are a number of special keys and marked with different symbols of which in the further description only the following are described: a key 6 (bearing a symbol of a book) provided for actuating an address book, a multi-function key 7 near the display 5 which serves for (besides other purposes) entering a command, and a key 8 for starting and ending a telephone conversation (marked with a symbol of a telephone receiver).

Further, the left side of the mobile telephone is provided with an up-key 11 and a down-key 12 which have (besides other purposes) the purpose to move up and down, information to be shown on the display. In other embodiments of the invention the up and down keys are positioned on the front side of the mobile telephone.

Further, the mobile telephone 1 has a speaker 14, a microphone 15 and an antenna 16 in a known manner. The mobile telephone 1 is designed for dual-band use according to the standards GSM900 and GSM1800.

Electronic circuitry inside the mobile telephone 1 comprises a processor 30 and a memory 35. The memory 35 stores data and a programme for operating functions of the mobile telephone, including a programme for displaying information on the display 5. This programme for displaying is a WML-browser which provides displaying local information and internet information with the same look and feeling on the display.

In figure 2, the display 5 shows a part of the local address book or directory. The local address book in addition to names of persons contains of course also the telephone numbers of these persons.

The information shown in figure 2 on the display 5 was caused by the user by shortly pressing the address book key 6, and then by moving the information within the display up and down by means of the corresponding keys 11, 12 (scrolling). If the user now wants to initiate a telephone call for example to the person bearing the name Bruijn, the user will highlight this name by actuating the appropriate keys, and then press the key 8.

If, however, the user searches a person named Bruijn, but not that person enclosed in the (local) address book, the user has to press down the address book key 6 for a longer time (about 0,5 seconds) in the present embodiment and this pressing down is interpreted by the programme stored in the memory 35 as a command to connect to an address book in the internet (in other examples to an intranet of a firm or the like) and to open this remote address book exactly at a location where the name(s) Bruijn is/are to be expected and to show that part of the remote address book on the display 5. If the user finds the wanted name, the user will highlight that name, and start the telephone connection by pressing the key 8.

Another possibility starting from the state shown in figure 2 for accessing a remote address book (or the so-called white pages) is that the user highlights a button 40 ("WHITE PAGES") permanently present in the lower part of the display 5 in that mode where names of the local address book are shown and to press thereafter the key 7 (enter-key). This will also provide access to the above mentioned remote address book in the logical vicinity of the names shown in the figure 2 (names Boivin, Bruijn) and this kind of use is appropriate if the correct family name of the person searched is not shown in the display. In the embodiment of the invention, the remote information thus displayed will look like local information, with the exception that the button 40 is not present.

In other embodiments of the invention, various modifications with respect to particularities of use of the mobile telephone can be provided. The kind of use described above is only for illustration and is not intended in any way for limiting the invention to a special use of the telephone described here for a very special programme or browser.

The mobile telephone 1 thus has incorporated a WML-browser which presents remote information on the display 5, which remote information is stored on a server in the internet in the form of WML pages, and which browser can also display information stored inside the mobile telephone with the same appearance to the user. This is done by storing the information inside the mobile telephone, especially in the memory 35, in the form of WML pages.

Mobile telephones normally need a SIM card for being usable, and the SIM card has to be inserted by the user prior to the first use. The SIM card comprises a memory device (chip) containing information about the provider company providing the mobile telephone services, the telephone number and so on. Further, it is known in the art that this chip is also able to store data input by the user, for example data of an address book, and to transport such data to another mobile telephone by inserting the SIM card there.

The SIM cards used hitherto do not store such information in the form of WML-pages. The mobile telephone according to the invention includes in its programme a routine which translates or transfers the information of the known SIM card into information which can be presented to the user by the WML-browser incorporated in the mobile telephone. Therefore, such information may have an appearance different from that on known mobile telephones.

Also, if the user wants for example to transfer the complete address book of his/her mobile telephone to the SIM card, this will be done by the programme incorporated in the mobile telephone 1 by means of a routine which transfers the WML pages containing this information to that kind of code/information which is used for storage in a SIM card. In this way, it is also possible, to transfer the information of an address book of a mobile telephone according to invention to a mobile telephone according to the state of the art which does not use a WML browser for presenting local data by the intermediate of a SIM card.

Other embodiments and methods according to the invention use newer techniques, e.g. UMTS.

## Claims

1. Method for accessing local information stored in a local data base of a communication terminal and for accessing remote information stored in a telecommunication network on a communication terminal having a browser to access remote stored information,
**characterized in that**
said browser is also used for local information.

2. Method according to claim 1, which is performed on a mobile terminal.

3. Method according to claim 1 or 2, **characterized in that** the local information is linked with the remote (WML-based) information in such a way that local information and remote WML-information can be accessed by similar commands with a similar user interface.

4. Method according to any of claims 1 to 3, **characterized in that** it uses speech-powered pages in order to allow speech dialling.

5. Method according to any of the preceding method claims, **characterized in that** a translation/interpretation process is provided for making accessible data stored on a SIM card in a form different than WML information for the presentation software of the mobile telephone.

6. Method according to any of the preceding claims, **characterized in that** a translation/interpretation process is provided for storing information of the mobile telephone stored in the form of WML pages, on a SIM card in a form different than WML information.

7. Communication terminal which is adapted to access local information stored in a local data base and to access remote information stored in a remote communication network including terminals connected by wireless transmission to remote network, **characterized in that** the terminal is adapted for performing the method of any of the preceding claims.

8. Terminal according to claim 7, **characterized in that** it comprises means for storing software.

9. Terminal according to claim 8, **characterized in that** the software is a WML browser.

10. Terminal according to any of claims 7 to 9 which comprises means for making accessible data stored on a SIM card in a form different than WML information for the presentation means of the mobile telephone.

11. Terminal according to any of claims 7 to 10 which comprises means for storing information of the mobile telephone stored in the form of WML pages, on a SIM card in a form different than WML information.
